# EUROPÄISCHE PATENTSCHRIFT

(11) **EP 0 304 675 B1**
(45) Veröffentlichungstag und Bekanntmachung des Hinweises auf die Patenterteilung: **27.01.1993**
(21) Anmeldenummer: 88112444.0
(22) Anmeldetag: 01.08.1988
(51) Int. Cl.: C09J 175/04

(54) **Feuchtigkeitshärtende Beflockungskleber für polymere Substrate**
Humidity-curing flocking adhesive for polymer substrates
Adhésif de flocage réticulant à l'humidité pour substrat polymères

(30) Priorität: 10.08.1987 DE 3726555
(43) Veröffentlichungstag der Anmeldung: 01.03.1989
(73) Patentinhaber: Henkel Kommanditgesellschaft auf Aktien, 40191 Düsseldorf (DE)
(72) Erfinder: Seltmann, Hans-Günter, Dr., D-4000 Düsseldorf 13 (DE); Hoffmann, Hans-Josef, D-4152 Kempen 1 (DE); Lippert, Hartmut, D-4019 Monheim (DE)

(56) Entgegenhaltungen:
- EP-A- 0 103 453
- EP-A- 0 129 808
- GB-A- 1 495 573

## Beschreibung

Die Erfindung betrifft feuchtigkeitshärtende Beflockungskleber für polymere Substrate, enthaltend Polyurethan-Prepolymere auf Basis von Diisocyanaten und Polyolen, aromatische Nitrosoverbindungen, mehrfunktionelle Epoxidverbindungen und gegebenenfalls Alkylbenzole sowie übliche Hilfsstoffe, Härtungskatalysatoren und/oder Härtungsbeschleuniger.

Die feuchtigkeitshärtenden Beflockungskleber der Erfindung stellen lösemittelfreie Klebstoffsysteme dar, mit denen flexible polymere Substrate, z.B. Gummiprofile, mit einem Faserüberzug versehen bzw. beflockt werden können.

Zur Herstellung flexibler, beflockter Substrate ist es bekannt, die Substratoberfläche mit einer Klebstofflösung zu behandeln und nach dem Verdunsten des Lösemittels in einem elektrischen Feld auf der Oberfläche senkrecht stehende Faserkurzschnitte aufzubringen. Die so hergestellten beflockten Gegenstände weisen eine textilartige Oberfläche bei oftmals geringer Reibung, z.B. gegenüber Glas, auf. Derartige Profile können z.B. als Dichtmanschetten in Fensterschächten von Automobilen eingesetzt werden. In ähnlicher Weise können beflockte Matten, beflockte biegsame Wellen, beflockte Fußbodenbeläge, beflockte Gummihandschuhe, Hafttafeln für Demonstrationszwecke, beflockte Putzwalzen für die Spinnereimaschinenindustrie, Textilhülsen oder dergleichen hergestellt werden.

Als Beflockungskleber sind bisher handelsübliche Polyurethan-Klebstoffe verwendet worden, die z.B. aus einem Gemisch von 2 Prepolymeren mit Isocyanatendgruppen bestehen. Typische Rezepturen enthalten 40 % Polyurethan-Prepolymer sowie 60 % eines schnell verdunstenden Lösemittels. Die Verdünnung durch das Lösemittel bewirkt eine ausreichend niedrige Verarbeitungsviskosität, damit der Klebstoff durch Gießverfahren, Walzenauftrag oder Spritzverfahren aufgebracht werden kann. Als Lösemittel werden Xylol, Toluol, Ketonmischungen oder chlorierte Kohlenwasserstoffe eingesetzt. Das Lösemittel muß schnell verdunsten, damit im Falle brennbar Lösemittel bei der Beflockung mittels durch Hochspannung erzeugter elektrischer Felder in einer Beflockungskabine keine Explosionsgefahren auftreten. Die verdunsteten Lösemittel müssen entsprechend den Vorschriften der TA-Luft entsorgt werden.

Typische Beispiele für lösemittelhaltige Beflockungskleber der eingangs genannten und vorstehend diskutierten Art sind aus den DE-A 33 22 695 und 34 00 340 bekannt. Sie enthalten Polyurethan-Prepolymere auf Basis von Diisocyanaten und Polyolen, aromatische Dinitrosoverbindungen als Haftverbesserer, mehrfunktionelle Reaktionsprodukte aus Isocyanaten und Epoxidverbindungen, niedrig siedende Alkylbenzole wie Toluol oder Xylol als Lösemittel, übliche Hilfsstoffe wie Füllstoffe, Pigmente oder Stabilisatoren. Die Reaktionsprodukte aus Isocyanaten und Epoxidverbindungen sind unter Ausschluß von Wasser mittels Reaktionskatalysatoren, die eine direkte Reaktion zwischen den Epoxidgruppen und den Isocyanatgruppen bewirken, z.B. Alkaliphenolate, -acetate, -lactate, -naphthenate, und -alkoholate sowie Alkalisalze von Fettsäuren, z.B. Lithiumstearat, hergestellt worden. Diese Reaktionsprodukte enthalten keine Epoxidgruppen.

Demgegenüber ist die Erfindung auf feuchtigkeitshärtende, lösemittelfreie Beflockungskleber für polymere Substrate, z.B. unpolare Elastomere wie EPDM-, CM- und CR-Elastomere gerichtet, bei denen die obengenannten Nachteile eines Gehalts von Lösemitteln nicht auftreten und die darüber hinaus eine gute Wasserfestigkeit aufweisen.

Diese Aufgabe wird erfindungsgemäß durch feuchtigkeitshärtende Beflockungskleber der eingangs genannten Art gelöst, die durch einen Gehalt an
a) 80 bis 96 Gew.-Teilen an Umsetzungsprodukten von Diisocyanaten aus der von Diphenylmethan-, hydriertem Diphenylmethan-, Toluylen- und Hexamethylen-diisocyanat gebildeten Gruppe mit Gemischen von terminal-difunktionellen Polyolen, die aus der von Polyethylenglykol, Polypropylenglykol, Polytetrahydrofuran, Polycaprolacton, Polyesterolen, Rizinusöl und Polybutadien-Polyolen gebildeten Gruppe ausgewählt sind, mit einem Zahlenmittel der Molmassen von 400 bis 1000 einerseits und von mehr als 1000 bis 4000 andererseits mit einem NCO/OH-Molverhältnis von 6 : 1 bis 8 : 1 und einer Viskosität im Bereich von 600 bis 900 mPa·s/20 °C, als Polyurethan-Prepolymere,
b) 1 bis 5 Gew.-Teilen an aromatischen Dinitrosoverbindungen
   und
c) 3 bis 10 Gew.-Teilen an Epoxidharzen mit Hydroxylwerten von weniger als 0,01 und mit Epoxidwerten von 0,45 bis 0,75, ausgewählt aus der Gruppe der Umsetzungsprodukte von Epichlorhydrin mit Novolaken oder Bisphenolen
d) sowie gegebenenfalls 1 bis 20 Gew.-Teilen an Alkylbenzolen der allgemeinen Formel

   C₆H₅-CₙH₂ₙ₋₁

   in der n eine Zahl von 8 bis 16 bedeutet,
   unter Ausschluß von Katalysatoren, die die Reaktion von NCO-Gruppen mit Epoxygruppen zu Oxazolidongruppen katalysieren,
gekennzeichnet sind.

Die feuchtigkeitshärtenden Beflockungskleber der Erfindung können als einkomponentige oder als zweikomponentige Polyurethan-Klebstoffe eingesetzt werden. Bei der Verwendung von einkomponentigen Zubereitungen erfolgt die Härtung durch Feuchtigkeit, die aus der Umgebung oder aus den Fasern in das Klebematerial eindiffundiert. Dabei reagiert ein Teil der vorhandenen freien NCO-Gruppen mit Wasser zu Aminen, wobei diese mittels ihrer NH₂-Gruppe teils mit den restlichen Isocyanatgruppen zu Polyharnstoffen, teils mit den vorhandenen freien Epoxiverbindungen reagieren. Durch diesen Härtungsmechanismus lassen sich die Haftwirkung und die Stabilität gegen Witterungseinflüsse, insbesondere gegen Wasser, deutlich verbessern.

Es ist jedoch auch möglich, durch Zugabe einer Härterkomponente, z.B. eines mehrfunktionellen Alkohols oder eines mehrfunktionellen Amins, auszuhärten. Geeignete Härter hierfür sind weiterhin Polyester, Polyether oder Polyamide mit terminalen OH- oder NH₂-Endgruppen.

Die für die Herstellung der Polyurethan-Prepolymere verwendbaren Diisocyanate sind handelsüblich und können auch in Form ihrer technischen Gemische eingesetzt werden.

Die Viskosität der Polyurethan-Prepolymere kann über das Mischungsverhältnis zwischen terminal-difunktionellen Polyolen mit einem Zahlenmittel der Molmassen von 400 bis 1000 und derjenigen mit einem Zahlenmittel der Molmassen von mehr als 1000 bis 4000 eingestellt werden. Als Polyole eignen sich Polyesterole, Rizinusöl, Polybutadien-Polyole, Polytetrahydrofuran, Polycaprolactone sowie Polyethylenglykol; bevorzugt werden Polypropylenglykole, die ebenfalls bevorzugt mit Diphenylmethan-diisocyanat umgesetzt werden.

Wie bereits gesagt, enthalten die feuchtigkeitshärtenden Beflockungskleber der Erfindung als Haftverbesserer aromatische Dinitrosoverbindungen in Mengen von 1 bis 5 Gew.-Teilen, bevorzugt 1,5 bis 2,5 Gew.-Teile. Bevorzugt verwendet man 1,4-Dinitrosobenzol, auch in Form seiner handelsüblichen, überwiegend diese Verbindung enthaltenden technischen Gemische. Weiterhin sind m-Di-nitrosobenzol, m-Di-nitrosonaphthaline, p-Di-nitrosonaphthalin, 2,5-Di-nitroso-p-cymol, 2-Methyl-1,4-di-nitrosobenzol, 2-Methyl-5-chlor-1,4-dinitrosobenzol, 2-Fluor-1,4-dinitrosobenzol, 2-Methoxy-1,3-dinitrosobenzol, 5-Chlor-1,3-dinitrosobenzol, 2-Benzyl-1,4-dinitrosobenzol und 2-Cyclohexyl-1,4-dinitrosobenzol einsetzbar.

Die erfindungsgemäß einzusetzenden mehrfunktionellen Epoxidharze mit Hydroxylwerten von weniger als 0,01 und mit Epoxidwerten von 0,45 bis 0,75, die aus der Gruppe der Umsetzungsprodukte von Epichlorhydrin mit Novolaken oder Bisphenolen ausgewählt sind, unterscheiden sich von denjenigen gemäß DE-A 33 22 695 dadurch, daß letztere freie Hydroxylgruppen aufweisen; beschrieben sind dort z.B. Diglycidylether aus Epichlorhydrin und Bisphenol A. Durch die erfindungsgemäß einzusetzenden hydroxylgruppenfreien Epoxiharze mit Hydroxylwerten (Äquivalente OH pro 100 g Harz) von weniger als 0,01 wird eine niedrige Viskosität der Beflokkungskleber erreicht, die auch bei längerer Lagerung erhalten bleibt. Die Epoxyharze sind ebenfalls handelsübliche Verbindungen. Bevorzugt sind hier Umsetzungsprodukte von Epichlorhydrin und Bisphenol A oder F oder Novolaken.

Da die erfindungsgemäß einzusetzenden Polyurethan-Prepolymere Viskositäten im Bereich von 600 bis 900 mPa.s/20°C aufweisen, können sie nach Zusatz von aromatischen Dinitrosoverbindungen, Epoxidharzen und Hilfsstoffen direkt mittels Walzen, Gießanlagen oder Pinseln auf die zu beflockenden Substrate aufgetragen werden. Es können jedoch auch niedrigere Viskositäten erwünscht sein, z.B. wenn das Auftragen durch Aufspritzen erfolgen soll. In diesen Fällen kann man den feuchtigkeitshärtenden Beflockungsklebern der Erfindung 1 bis 20 Gew.-Teile Alkylbenzole der Formel C₆H₅-CₙH₂ₙ₋₁, in der n eine Zahl von 8 bis 16 bedeutet, zusetzen; bevorzugt sind handelsübliche technische Alkylbenzolgemische, wobei deren Alkylsubstituent eine Kettenlänge von C₁₀ bis C₁₄ aufweist. Diese Alkylbenzole dienen als Weichmacher und gestatten eine Einstellung der Viskosität im Bereich von 40 bis 500 mPa.s/20°C.

In Anbetracht ihrer Lösemittelfreiheit weisen die feuchtigkeitshärtenden Beflockungskleber der Erfindung hohe Flammpunkte auf, insbesondere über 110°C.

Die feuchtigkeitshärtenden Beflockungskleber der Erfindung dürfen keine Katalysatoren enthalten, die die Reaktion von NCO-Gruppen mit Epoxigruppen zu Oxazolidongruppen katalysieren. Hierzu gehören insbesondere die bereits genannten Alkaliphenolate, -acetate, -lactate, -naphthenate und -alkoholate sowie Alkalisalze von Fettsäuren, wie Lithiumstearat. Dagegen können die feuchtigkeitshärtenden Beflockungskleber der Erfindung Katalysatoren enthalten, die die Reaktion der freien NCO-Gruppen mit Wasser katalysieren, z.B. metallorganische Verbindungen des 4-wertigen Zinns wie Dibutyl-zinndilaurat oder tertiäre Amine. Mit den feuchtigkeitshärtenden Beflockungsklebern der Erfindung können nichtvulkanisierte Elastomere beflockt werden. Hierzu geht man von Elastomeren aus, wie sie üblicherweise vor der Vulkanisation vorliegen. Sie enthalten neben den Polymeren übliche Hilfsstoffe, z.B. Fettsäuren, Oxide des Magnesiums, Calciums oder Zinks, Vulkanisationsbeschleuniger und andere Vulkanisationshilfsmittel, Stabilisatoren, Lösemittel, Füllstoffe und weitere Hilfsstoffe. Die nichtvulkanisierten Gegenstände werden in die gewünschte Form gebracht und mit dem Beflockungskleber der Erfindung beschichtet; es werden dann in einem elektrostatischen Feld die Fasern aufgebracht. Nach Erreichen einer Anfangsfestigkeit wird sodann in üblicher Weise, d.h. bei Temperaturen zwischen 120 und 180°C 5 bis 60 Minuten lang vulkanisiert, wobei gleichzeitig der Beflockungskleber aushärtet.

Es können auch vulkanisierte Elastomere beschichtet werden; es können z.B. Gummiplatten durch Aufsprühen oder Aufstreichen mit dem Beflockungskleber der Erfindung versehen werden; anschließend erfolgt die elektrostatische Beflockung und schließlich die Aushärtung bei Temperaturen von 100 bis 180°C innerhalb von 1 bis 5 min.

Es können Elastomere unterschiedlichster Art und Herkunft vor und nach der Vulkanisation beflockt werden, z.B. Naturkautschuk, weiterhin polare Kautschuktypen wie Nitrilkautschuk, Chlorbutadien oder chloriertes Isopren, Butylkautschuk, Elastomere auf Basis von Styrol/Butadien oder Styrol/Isopren.

Bevorzugt ist jedoch die Beflockung unpolarer Elastomertypen, insbesondere auf Basis von Terpolymeren aus Ethylen, Propylen und Dienmonomeren, z.B. Diethylidennorbornen. Derartige Elastomere sind handelsüblich und werden im allgemeinen unter der Sammelbezeichnung EPDM angeboten; infolge ihrer sehr guten Bewitterungseigenschaften haben sie in letzter Zeit an Bedeutung gewonnen.

Die Auswahl des Fasermaterials, das mit Hilfe der Beflockungskleber der Erfindung auf elastomere Substrate oder auch auf andere flexible Substrate, z.B. Polyethylen- oder Polypropylenfolien oder andere Folienmaterialien aufgebracht werden kann, ist nicht kritisch. So können Polyesterfasern, z.B. Polyethylenglykol-terephthalat, Polyamidfasern wie Nylon 6 oder Nylon 6.6, Polyurethanfasern, Kunstseide, Baumwolle und/oder Cellulosefasern aufgeflockt werden. Zweckmäßigerweise verwendet man Faserschnitte mit einer mittleren Länge zwischen 0,2 und 2 mm.

Die Erfindung wird im folgenden anhand von bevorzugten Ausführungsbeispielen näher erläutert.

### Beispiel 1.

### A. Herstellung eines Prepolymeren.

1 Mol eines Polypropylenglykols mit einem Zahlenmittel des Molekulargewichts von 1000 (PPG 1025) und 2,5 Mol eines Polypropylenglykols mit einem Zahlenmittel des Molekulargewichts von 2000 (PPG 2025) sowie 24 Mol Diphenylmethan-diisocyanat wurden in einem Dreihalskolben mit Rückflußkühler, Thermometer und Rührer auf 90°C erwärmt. Anschließend wurden 0,5 % eines üblichen Katalysators (z.B. Dabco) zugegeben. Die Temperatur stieg auf 100°C an. Nach dem Abstellen der Heizung sank die Temperatur wieder ab. Zur Kontrolle der Vollständigkeit der Reaktion wurde eine NCO-Bestimmung durchgeführt.

### B. Herstellung eines Beflockungsklebers.

83,4 Gew.-% des nach Stufe A erhaltenen Prepolymeren wurden mit 10 Gew.-% eines handelsüblichen C₁₀-C₁₄-Alkylbenzols, 1,6 Gew.-% eines pulverförmigen 1,4-Dinitrosobenzols (technisch) und 5,0 Gew.-% eines Epoxidharzes auf Basis von Epichlorhydrin und Novolak mit einem Hydroxylwert (Äquivalente OH pro 100 g Harz) von 0 und einem Epoxidwert (Äquivalente Epoxid pro 100 g Harz) von 0,56 unter Rühren vermischt.

### Beispiel 2.

Es wurde wie in Beispiel 1 verfahren, jedoch wurden anstelle des dort verwendeten Epoxidharzes 5,0 Gew.-% eines Epoxidharzes auf Basis von Epichlorhydrin und Bisphenol A (Bisphenol-A-diglycidylether; DGEBA) mit einem Hydroxylwert von 0 und einem Epoxidwert von 0,56 eingesetzt.

### Vergleichsbeispiel I.

Es wurde wie in Beispiel 1 verfahren, jedoch ohne einen Zusatz an Epoxidharz.

### Vergleichsbeispiel II.

Es wurde wie in Beispiel 1 verfahren, anstelle des dort beschriebenen, hydroxylgruppenfreien Epoxidharzes wurde jedoch ein Hydroxylgruppen enthaltendes Epoxidharz auf Basis von Epichlorhydrin und Bisphenol A mit einem Epoxiwert von 0,200 bis 0,225 und einem Hydroxylwert von 0,29 eingesetzt.

### Vergleichsbeispiel III.

Es wurde wie in Beispiel I verfahren, anstelle des dort verwendeten hydroxylgruppenfreien Epoxidharzes wurde jedoch ein epoxigruppenhaltiges Epoxidharz mit einem Epoxiwert von 0,21 und einem Hydroxylwert von 0,04 eingesetzt.

Die vorstehend genannten Beflockungskleber wurden zunächst hinsichtlich ihrer Lagerstabilität (2 Wochen bei 40°C) getestet. Weiterhin wurde die Haftfestigkeit auf einem EPDM-Kautschuk nach 5-tägiger Lagerung bei 80°C in Wasser bestimmt, wobei im einzelnen wie folgt verfahren wurde:
Als Testsubstrate dienten EPDM-Kautschukplatten, von denen nachstehend die Zusammensetzung sowie die Vulkanisationsbedingungen angegeben werden:

| EPDM | |
|---|---|
| Ethylenpropylenterpolymer-Kautschuk | 100,0 Teile |
| Stearinsäure | 1,0 " |
| ZnO | 5,0 " |
| Ruß | 100,0 " |
| CaO | 10,0 " |
| Kreide (Oberfläche behandelt mit Stearinsäure) | 50,0 " |
| Zink-mercaptobenzthiazol | 1,2 " |
| Zink-ethylphenyldithiacarbamat | 3,0 " |
| Dipentamethyl-thiuramtetrasulfid | 2,0 " |
| Schwefel | 0,4 " |
| Vulkanisationsbedingung: 160°C 10 min | |

Die Oberflächen der vorstehend erhaltenen Substratplatten wurden durch Abwaschen mit Xylol gereinigt, mit den Beflokkungsklebermischungen im Streichauftrag beschichtet und anschließend elektrostatisch beflockt. Als Flocken wurden 0,75 mm lange Polyester-Faserschnitte eingesetzt. Die Trocknung der Beflockungskleber erfolgte bei 180°C innerhalb von 5 Minuten.

Die beflockten Platten wurden 5 Tage bei 80°C in Wasser gelagert. Anschließend wurde die Schälfestigkeit bestimmt. Hierzu wurden 1 x 15 cm Streifen aus den Platten geschnitten. Über die beflockte Schicht wurde eine 1 cm hohe und 7 cm lange Siegelwachsschicht aufgegossen und abgekühlt. Die Siegelwachsschicht wurde über eine Rolle im Winkel von 90° vom beflockten Substrat abgezogen. Die dabei gemessene Kraft ist ein Maß für die Haftfestigkeit.

Die ermittelten Werte hinsichtlich der Viskosität und der Haftfestigkeit sind in der folgenden Tabelle 1 zusammengefaßt.

**Tabelle 1**

| Viskosität sowie Haftfestigkeit auf EPDM nach Wasserlagerung | | |
|---|---|---|
| Beispiel | Viskosität (2 Wochen, 40oC; mPa.s) | Haftfestigkeit (5 Tage, 80oC; N/mm) |
| 1 | 350 | 8 |
| 2 | 370 | 8 |
| I | 350 | 3 |
| II | 10.000 | 8* |
| III | 2.000 | 8* |

| | | |
|---|---|---|
| * nur frisch hergestellte Produkte | | |

Es zeigt sich, daß die Beflockungskleber der Erfindung gemäß den Beispielen 1 und 2 gegenüber den Beflockungsklebern gemäß den Vergleichsbeispielen II und III eine verbesserte Lagerstabilität aufweisen; lediglich der Beflockungskleber gemäß Vergleichsbeispiel I, der kein Epoxidharz enthält, weist eine derjenigen der Ausführungsbeispiele vergleichbare Viskosität auf. Die Haftfestigkeit nach Wasserlagerung ist bei den Ausführungsbeispielen 1 und 2 und den Vergleichsbeispielen II und III (wenn letztere unmittelbar nach der Herstellung verwendet werden) gleich, die Haftfestigkeit nach Wasserlagerung ist bei dem epoxidharzfreien Vergleichsbeispiel I wesentlich schlechter. Mit zunehmender Lagerzeit nehmen jedoch auch die Haftfestigkeiten der Beflockungskleber gemäß den Vergleichsbeispielen II und III ab.

## Patentansprüche

1. Feuchtigkeitshärtende Beflockungskleber für polymere Substrate, enthaltend Polyurethan-Prepolymere auf Basis von Diisocyanaten und Polyolen, aromatische Dinitrosoverbindungen, mehrfunktionelle Epoxidverbindungen und gegebenenfalls Alkylbenzole sowie üblichen Hilfsstoffe, Härtungskatalysatoren und/oder Härtungsbeschleuniger, gekennzeichnet durch einen Gehalt an
a) 80 bis 96 Gew.-Teilen an Umsetzungsprodukten von Diisocyanaten aus der von Diphenylmethan-, hydriertem Diphenylmethan-, Toluylen- und Hexamethylen-diisocyanat gebildeten Gruppe mit Gemischen von terminal-difunktionellen Polyolen, die aus der von Polyethylenglykol, Polypropylenglykol, Polytetrahydrofuran, Polycaprolacton, Polyesterolen, Rizinusöl und Polybutadien-Polyolen gebildeten Gruppe ausgewählt sind, mit einem Zahlenmittel der Molmassen von 400 bis 1000 einerseits und von mehr als 1000 bis 4000 andererseits mit einem NCO/OH-Molverhältnis von 6 : 1 bis 8 : 1 und einer Viskosität im Bereich von 600 bis 900 mPa·s/20 °C, als Polyurethan-Prepolymere,
b) 1 bis 5 Gew.-Teilen an aromatischen Dinitrosoverbindungen und
c) 3 bis 10 Gew.-Teilen an Epoxidharzen mit Hydroxylwerten von weniger als 0,01 und mit Epoxidwerten von 0,45 bis 0,75, ausgewählt aus der Gruppe der Umsetzungsprodukte von Epichlorhydrin mit Novolaken oder Bisphenolen
d) sowie gegebenenfalls 1 bis 20 Gew.-Teilen an Alkylbenzolen der allgemeinen Formel
C₆H₅-CₙH₂ₙ₋₁
in der n eine Zahl von 8 bis 16 bedeutet,
unter Ausschluß von Katalysatoren, die die Reaktion von NCO-Gruppen mit Epoxygruppen zu Oxazolidongruppen katalysieren.

2. Feuchtigkeitshärtende Beflockungskleber nach Anspruch 1, dadurch gekennzeichnet, daß das terminal-difunktionelle Polyol ein Polypropylenglykol ist.

3. Feuchtigkeitshärtende Beflockungskleber nach Anspruch 1, dadurch gekennzeichnet, daß die terminal-difunktionellen Polyole Polypropylenglykole sind.

4. Feuchtigkeitshärtende Beflockungskleber nach einem der Ansprüche 1 bis 3, dadurch gekennzeichnet, daß die terminal-difunktionellen Polyole Gemische von Polypropylenglykolen mit einem Zahlenmittel der Molmassen von 400 bis 1000 einerseits und 2000 bis 4000 andererseits sind.

5. Feuchtigkeitshärtende Beflockungskleber nach einem der Ansprüche 1 bis 4, dadurch gekennzeichnet, daß das Epoxidharz mit Hydroxylwerten von weniger als 0,01 ein Umsetzungsprodukt von Epichlorhydrin und Bisphenol A oder F oder Novolaken ist.

6. Feuchtigkeitshärtende Beflockungskleber nach einem der Ansprüche 1 bis 4, dadurch gekennzeichnet, daß das Alkylbenzol ein C₁₀-C₁₄-alkylsubstituiertes Benzol ist.

7. Feuchtigkeitshärtende Beflockungskleber nach einem der Ansprüche 1 bis 6, gekennzeichnet durch einen Gehalt von 1 bis 2 Gew.-Teilen an aromatischen Dinitrosoverbindungen.

8. Feuchtigkeitshärtende Beflockungskleber nach einem der Ansprüche 1 bis 7, gekennzeichnet durch eine Viskosität im Bereich von 40 bis 500 mPa.s/20°C.

9. Feuchtigkeitshärtende Beflockungskleber nach einem der Ansprüche 1 bis 8, gekennzeichnet durch einen Flammpunkt von mehr als 110°C.

## Claims

1. Moisture-curing flocking adhesives for polymeric substrates containing polyurethane prepolymers based on diisocyanates and polyols, aromatic dinitroso compounds, polyfunctional epoxide compounds and, optionally, alkylbenzenes and also standard auxiliaries, curing catalysts and/or curing accelerators, characterized by a content of
a) 80 to 96 parts by weight of reaction products of diisocyanates from the group comprising diphenyl methane diisocyanate, hydrogenated diphenyl methane diisocyanate, tolylene diisocyanate and hexamethylene diisocyanate with mixtures of terminal-difunctional polyols selected from the group consisting of polyethylene glycol, polypropylene glycol, polytetrahydrofuran, polycaprolactone, polyesterols, castor oil and polybutadiene polyols and having a number average molecular weight of 400 to 1000 on the one hand and of more than 1000 to 4000 on the other hand with an NCO:OH molar ratio of 6:1 to 8:1 and a viscosity in the range from 600 to 900 mPa.s/20°C as polyurethane prepolymers,
b) 1 to 5 parts by weight of aromatic dinitroso compounds,
c) 3 to 10 parts by weight of epoxy resins having hydroxyl values of less than 0.01 and epoxide values of 0.45 to 0.75 selected from the group of reaction products of epichlorohydrin with novolaks or bisphenols,
d) and, optionally, 1 to 20 parts by weight of alkylbenzenes corresponding to the general formula
C₆H₅-CₙH₂ₙ₋₁
in which n has a value of 8 to 16,
in the absence of catalysts which catalyze the reaction of NCO groups with epoxide groups to oxazolidone groups.

2. Moisture-curing flocking adhesives as claimed in claim 1, characterized in that the terminal-difunctional polyol is a polypropylene glycol.

3. Moisture-curing flocking adhesives as claimed in claim 1, characterized in that the terminal-difunctional polyols are polypropylene glycols.

4. Moisture-curing flocking adhesives as claimed in any of claims 1 to 3, characterized in that the terminal-difunctional polyols are mixtures of polypropylene glycols having a number average molecular weight of 400 to 1000 on the one hand and of 2000 to 4000 on the other hand.

5. Moisture-curing flocking adhesives as claimed in any of claims 1 to 4, characterized in that the epoxy resin having a hydroxyl value of less than 0.01 is a reaction product of epichlorohydrin and bisphenol A or F or novolaks.

6. Moisture-curing flocking adhesives as claimed in any of claims 1 to 4, characterized in that the alkylbenzene is a C₁₀₋₁₄ alkyl-substituted benzene.

7. Moisture-curing flocking adhesives as claimed in any of claims 1 to 6, characterized by a content of 1 to 2 parts by weight of aromatic dinitroso compounds.

8. Moisture-curing flocking adhesives as claimed in any of claims 1 to 7, characterized by a viscosity in the range from 40 to 500 mPa.s/20°C.

9. Moisture-curing flocking adhesives as claimed in any of claims 1 to 8, characterized by a flash point of more than 110°C.

## Revendications

1. Adhésif de flocage réticulant à l'humidité pour substrats polymères comprenant des prépolymères polyuréthane à base de diisocyanates et de polyols, des composés nitroso, aromatiques, des composés époxydes polyfonctionnels et le cas échéant des alkylbenzènes ainsi que des adhésifs usuels, des catalyseurs de durcissement et/ou des accélérateurs de durcissement caractérisé en ce que :
a) 80 à 96 parties en poids de produits de réaction de diisocyanates choisis dans le groupe des diphényhméthane-, (diphénylméthanehydrogéné)-, toluylène et hexaméthylène diisocyanate, avec des mélanges de polyols difonctionnels en position terminale, choisis dans le groupe des polyéthylèneglycol, polypropylèneglycol, polyesterols, huile de ricin et polybutadiènepolyols, avec un nombre de masse molaire moyen de 400 à 1 000 d'une part et de plus de 1 000 à 4 000 d'autre part avec une proportion molaire NCO/OH de 6 : 1 à 8 : 1 et une viscosité dans l'intervalle de 600 à 900 mPa.s/20°C, comme prépolymères polyuréthane,
b) 1 à 5 parties en poids de composés aromatiques dinitroso et
c) 3 à 10 parties en poids de résines époxydes à indices d'hydroxyle inférieurs à 0,01 et à indices d'époxyde de 0,45 à 0,75, choisies dans le groupe des produits de réaction de l'épichlorhydrine avec les novolaques ou bisphénols,
d) ainsi que le cas échéant de 1 à 20 parties en poids d'aclkylbenzènes de formule générale
C₆H₅-CₙH₂ₙ₋₁
dans laquelle n est un nombre de 8 à 16,
à l'exclusion de catalyseurs, qui catalysent la réaction de groupes NCO avec des groupes époxy pour donner des groupes oxazolidane.

2. Adhésif de flocage réticulant à l'humidité selon la revendication 1, caractérisé en ce que le polyol difonctionnel en position terminale est un polypropylèneglycol.

3. Adhésif de flocage réticulant à l'humidité selon la revendication 1, caractérisé en ce que les polyols difonctionnels en position terminale sont des polypropylèneglycols.

4. Adhésif de flocage réticulant à l'humidité selon l'une des revendications 1 à 3, caractérisé en ce que les polyols difonctionnels en position terminale sont des mélanges de polypropylèneglycols ayant d'une part un nombre moyen de masse molaire compris entre 400 et 1 000 et d'autre part entre 2 000 et 4000.

5. Adhésif de flocage réticulant à l'humidité selon l'une des revendications 1 à 4, caractérisé en ce que la résine époxy d'indice d'hydroxyle inférieur à 0,01 est un produit de réaction d'épichlorhydrine et de bisphénol A ou F ou de novolaques.

6. Adhésif de flocage réticulant à l'humidité, selon l'une des revendications 1 à 4, caractérisé en ce que l'alkylbenzène est un benzène substitué par un alkyle en C₁₀-C₁₄.

7. Adhésif de flocage réticulant à l'humidité selon l'une des revendications 1 à 6, caractérisé par une teneur de 1 à 2 parties en poids de composés dinitroso aromatiques.

8. Adhésif de flocage réticulant à l'humidité selon l'une des revendications 1 à 7 caractérisé par une viscosité comprise entre 40 et 500 mPa.s/20°C.

9. Adhésif de flocage selon l'une des revendications 1 à 8 caractérisé par un point éclair supérieur à 110°C.
